# EUROPEAN PATENT APPLICATION

(11) **EP 4 660 975 A1**
(43) Date of publication of application: **10.12.2025**
(21) Application number: 24180589.4
(22) Date of filing: 06.06.2024
(51) Int. Cl.: G06V 40/13, G06V 10/145

(54) **AN IMAGING SYSTEM AND A METHOD SYSTEM FOR CAPTURING IMAGES OF OBJECTS TO BE IMAGED**

(71) Applicant: Nederlandse Organisatie voor toegepast-natuurwetenschappelijk Onderzoek TNO, 2595 DA 's-Gravenhage (NL)
(72) Inventor: Akkerman, Hylke Broer, 2595 DA 's-Gravenhage (NL); Oderwald, Michiel Peter, 2595 DA 's-Gravenhage (NL); Van Brug, Hedser, 2595 DA 's-Gravenhage (NL); Bussink, Peter Gerhardus Wilhelmus, 2595 DA 's-Gravenhage (NL); Verbeek, Roy Gerardus Franciscus Antonius, 2595 DA 's-Gravenhage (NL); Bel, Matheus Godefridus Johannes, 2595 DA 's-Gravenhage (NL)
(74) Representative: V.O.

(57) **Abstract**

The invention pertains to an imaging system and method for capturing images of objects, whether in direct contact with or at a distance from the imaging panel. A frontlight unit, equipped with a waveguide and numerous light directing elements, efficiently illuminates the object from the front. The light directing elements, strategically positioned within the interstitial spaces of adjacent imager pixels, form a matrix-like structure that facilitates even distribution of light toward the object. Additionally, an optical configuration located between the frontlight unit and the imaging panel focuses and directs the incoming light onto the imaging panel with imaging pixels.

## Description

### FIELD OF THE INVENTION

The invention relates to an imaging system for capturing images of objects to be imaged. The invention also relates to a method for capturing images of objects using an imaging system.

### BACKGROUND TO THE INVENTION

In the field of imaging technology, the capture of high-quality images plays an important role across a wide array of applications, from medical diagnostics to industrial inspection and consumer electronics.

A significant advancement in this domain has been the development of large-area thin film imagers, which have demonstrated the capability to capture high-quality images in reflection mode. Traditional approaches to achieve uniform illumination of an object placed on or near the imaging surface have relied heavily on backlighting solutions. These solutions position a light source underneath the partly transparent imaging panel to illuminate the object from below.

Despite these advancements, the existing technologies face several limitations that hinder their effectiveness and applicability. One of the primary challenges is associated with imagers that possess a large fill factor active pixel. In these systems, a significant portion of the surface of the imager is dedicated to capturing light, aiming to maximize the image quality by collecting the maximum amount of light possible. However, this configuration presents a major drawback: the feasibility of integrating a backlight is substantially compromised. Given the dense arrangement of active pixels, there is minimal or no space to accommodate a backlight without adversely affecting the ability of the imager to capture light effectively.

Furthermore, while large-area thin film imagers have been successful in capturing images with high quality in reflection mode, they suffer from a rapid loss of imaging resolution when the object to be imaged is positioned further away from the surface of the imager. This limitation significantly reduces the versatility and effectiveness of the imaging system in applications requiring detailed imaging of objects or parts of objects at various distances from the imager surface.

Another critical issue with the current state of the art is the difficulty in maintaining uniform illumination of the object without simultaneously capturing unwanted imaging of the illumination source itself. When the illumination source is integrated too closely with the imaging panel, there is a risk that the light source may interfere with the captured image, leading to degraded image quality and accuracy.

Therefore, the existing imaging technologies, while capable of producing high-quality images under specific conditions, are hampered by their inability to provide uniform illumination in systems with high fill factor active pixels, their rapid loss of resolution with increased object distance, and the challenge of avoiding unwanted capture of the illumination source in the final image. These limitations highlight the need for an improved approach to imaging that can overcome these challenges, for example providing uniform illumination and maintaining high resolution across a range of object distances without compromising the quality of the captured images.

### SUMMARY OF THE INVENTION

It is an object of the invention to provide for a method and a system that obviates at least one of the above mentioned drawbacks.

Additionally or alternatively, it is an object of the invention to provide for an improved imaging system.

Additionally or alternatively, it is an object of the invention to provide for a method for enhancing the capturing images of objects using an imaging system.

Additionally or alternatively, it is an object of the invention to ensure uniform illumination and/or high-resolution imaging across varying object distances without compromising image quality.

Thereto, the invention provides for an imaging system for capturing images of objects to be imaged, comprising: an imaging panel configured to capture images of an object in contact with and at a distance from a surface of the imaging system by means of a plurality of imager pixels; a frontlight unit positioned to illuminate the object from the front, including a waveguide and a plurality of light directing elements distributed along said waveguide, wherein the waveguide includes a light source arrangement configured to provide light in the waveguide, and wherein the light directing elements are configured to direct light towards the object to be imaged; and an optical configuration positioned between the frontlight unit and the imaging panel, configured to focus and direct incoming light onto the imaging panel, wherein this optical configuration is configured to selectively direct light from the surface of the imaging system onto imager pixels of the imaging panel; and wherein the light directing elements are arranged within interstitial spaces formed by the adjacency of four neighboring imager pixels on the imaging panel as viewed from a top-down perspective, creating a matrix-like arrangement that enables emitted light to be evenly distributed and directed towards the object from between these pixels.

The imaging system is configured to capture images of an object both in contact with and at a distance from a surface of the imaging system. High-resolution imaging across a broad range of object proximities can be obtained. This design directly addresses and overcomes the limitations of existing imaging technologies, which experience a rapid loss of imaging resolution with increased object distance. The frontlight unit and optical system work together to illuminate and capture images. The imaging panel can be populated with numerous imager pixels, each designed to capture light and convert it into digital signals that collectively form an image. The frontlight unit is equipped with a waveguide, a component that can distribute light from a source across the imaging area. The inclusion of light directing elements ensures that light is precisely focused towards the object.

The matrix-like arrangement of the light directing elements, positioned within the interstitial spaces created by the adjacency of four neighboring imager pixels, guarantees that light is more evenly distributed across the imaging surface, reaching the object from multiple directions to eliminate shadows and uneven illumination that could degrade image quality. The matrix/array of light directing elements allows for improved uniform illumination.

Optionally, the optical configuration comprises a lens array and a corresponding pinhole layer, wherein each lens of the lens array is aligned with a respective pinhole to direct light onto a respective imager pixel of the imaging panel.

The optical system, positioned between the frontlight unit and the imaging panel, includes a lens array paired with a pinhole layer. Each lens in the array is aligned with a corresponding pinhole, creating a focused pathway for light to reach specific imager pixels on the panel. This alignment enables to deliver sharp, detailed images by ensuring that light is not dispersed randomly but directed onto the exact pixel intended for its capture.

The uniform light distribution of the waveguide, the precision focus afforded by the lens and pinhole array, and the arrangement of light directing elements enhances the image capturing.

Optionally, the optical configuration includes an optical collimator layer transparent for incident light angles close to the surface normal. This can facilitate the focus and direction of light with reduced optical aberrations. Furthermore, a simpler design may be obtained.

Optionally, the light directing elements are distributed within or on a surface of the waveguide facing towards the optical system.

The light directing elements, which could be in the form of scattering sites, diffraction elements, or other micro-optical components, can be configured to control the path of light as it travels from the waveguide towards the object to be imaged. By orienting these elements towards the optical system, light is guided in a targeted manner, reducing light loss and ensuring that the majority of light generated by the source reaches the object. This precise control over light directionality can be important for reducing wasted light and for enhancing the intensity and uniformity of illumination on the object.

Effective light transmission ensures that the images captured by the system are not only bright but also clear and rich in detail. This is achieved by minimizing optical losses within the system and ensuring that the light is focused accurately on the pixels that capture the image.

Optionally, one or more light-emitting sources are arranged adjacent to the waveguide, the one or more light-emitting sources being configured to couple light into the waveguide, and wherein the light directing elements are light-scattering sites.

Within this system, the light directing elements, embodied as light-scattering sites, are incorporated along the waveguide. These elements are designed to scatter the light in a uniform manner towards the object. The light-scattering sites are not merely passive components but are actively involved in shaping the light's trajectory, ensuring that it is evenly distributed across the entire field of view of the object.

Optionally, the light-scattering sites include a reflective metal layer.

Reflective metal layers are chosen based on their high reflectivity properties. Metals like aluminum (Al) or silver (Ag) may be preferred in some examples due to their excellent ability to reflect visible light. The reflective metal layer may act as a mirror, redirecting light towards the desired direction.

Optionally, the light-scattering sites comprise light scattering particles embedded in a medium, the light scattering particles being configured to scatter light towards a side of the frontlight unit that faces the object to be imaged.

The light-scattering sites may be areas within the frontlight unit where light scattering particles, are embedded into a suitable medium. These particles have been selected for their high refractive index, which makes them particularly effective at scattering light. The strategic positioning of these particles ensures that when light from the light source arrangement (such as side-emissive LEDs) enters the waveguide, it encounters these scattering sites and is redirected towards the object being imaged.

By embedding light scattering particles in the medium and configuring them to scatter light towards the object, may leads to a significant enhancement in the uniformity and diffusion of light. This is because the particles disperse the light in multiple directions, rather than allowing it to travel in a straight line. As a result, the light that reaches the object from the frontlight unit may more evenly and/or effectively illuminating the object without the concentration of light in specific areas, known as hotspots. This uniform dispersion of light is important for capturing images where the illumination across the object's surface is consistent, thereby avoiding areas of overexposure or underexposure.

The evenly illuminated images that result from this arrangement are of significantly higher quality. The even distribution of light ensures that all parts of the object, regardless of their orientation or position relative to the light source, are adequately illuminated.

By ensuring that the light is not focused too intensely on any single point, the risk of creating hotspots, which can distort the image and obscure details, is significantly reduced. Similarly, the problem of uneven lighting, where parts of the object are well-lit while others are in shadow, is addressed by the scattering particles' ability to distribute light evenly across the object's surface.

Optionally, the light-scattering sites include titanium dioxide (TiO2) particles.

The use of titanium dioxide (TiO2) particles as the light-scattering medium, can enhance the scattering efficiency, as it can have high refractive index. The high refractive index of TiO2 means that when light enters a material containing TiO2 particles, the difference in the speed of light between the medium and the TiO2 particles causes the light to bend and scatter in multiple directions. This scattering effect is particularly beneficial for the imaging system as it enables the even distribution of light across the object's surface. Shadows and uneven illumination (common issues in imaging systems) can be reduced/avoided, and it can be better ensured that all parts of the object are adequately lit, thereby enhancing the overall clarity and detail of the captured images.

Optionally, the scattering sites are patterned using photolithography.

A selective exposure of a light-sensitive chemical photoresist may be applied. The exposed areas may undergo a chemical transformation, enabling the subsequent development stage to either remove the exposed regions (in the case of positive photoresist) or the unexposed regions (in the case of negative photoresist), thereby creating a pattern that precisely matches the intended design of the scattering sites.

The size of each scattering site can be precisely controlled through photolithography, allowing for the precise tuning of the light scattering characteristics. Different sizes of scattering sites can modulate the intensity and distribution of light emitted from the frontlight unit, which can be important for achieving uniform illumination over the object being imaged. By fine-tuning the size of these sites, the system can effectively manage the dispersion of light, ensuring that it is evenly spread across the entire imaging area.

Furthermore, the distribution uniformity can be improved. Photolithography enables the strategic placement of scattering sites across the waveguide, ensuring that they are uniformly distributed. This uniformity is important for the even distribution of light, which directly impacts the quality of the captured images. Uniform light distribution can prevent issues such as hot spots or uneven lighting, which can detract from the clarity and consistency of the images produced by the imaging system.

Furthermore, the photolithographic process offers high repeatability, ensuring that each waveguide produced with this method will have scattering sites with consistent characteristics. This repeatability is important for scaling up production while maintaining the quality and performance of the imaging system.

Optionally, the light-scattering sites have a varying size and/or scattering characteristics based on their proximity to the one or more light-emitting sources in order to uniformly emit light across the waveguide.

In some examples, the sites are not uniform in their physical dimensions and/or their intrinsic light scattering properties; rather, they are configured with variations in size and scattering characteristics. The variation can be dependent on their proximity to the light-emitting sources, such as LEDs, that are positioned adjacent to the waveguide to couple light into it.

This design provides for a gradient approach to scattering site characteristics. Scattering sites closer to the light-emitting sources may be designed to be smaller or to have different scattering properties compared to those located towards the center of the waveguide, where light intensity from the sources naturally diminishes. This deliberate gradation ensures that light emitted from the edges, where it is initially more intense, is moderated as it travels towards the center, resulting in a more balanced and uniform light emission across the entire surface of the waveguide.

This configuration addresses a common challenge in imaging systems: achieving consistent light distribution across the imaging area. Traditional systems often struggle with uneven lighting, which can lead to hotspots or areas of under-illumination, adversely affecting the quality and consistency of captured images. The gradient distribution of scattering site characteristics within this system mitigates these issues by ensuring that light is more evenly diffused and directed towards the object to be imaged.

The light uniformity can thus be significantly enhanced, ensuring that the entire object, regardless of its position relative to the light source, is illuminated in an improved way (cf. more evenly). This uniform illumination can be important for capturing high-quality images that are consistent across the imaging area, without the variances in brightness and contrast that can occur with uneven lighting. Furthermore, by optimizing the distribution of light, the system maximizes the efficiency of light usage, ensuring that all available light contributes to the imaging process, thereby enhancing the system's overall energy efficiency.

Moreover, this approach contributes directly to the system's ability to capture images with consistent quality and illumination. By eliminating the challenges associated with uneven light distribution, the system ensures that images are captured with high fidelity, showcasing even the most subtle details without the distraction of shadows or overexposure. This level of consistent quality can be important for applications where precision and detail are strongly desired, such as in medical imaging, quality control in manufacturing, in security applications, etc.

Optionally, the surface shape of each light-scattering site is defined by the geometric boundaries created by the intersection of four circles, wherein the resulting shape of the light-scattering site is contoured by parts of said circles.

The surface shape of each light-scattering site can be intricately defined by the geometric boundaries formed through the intersection of four circles. Such geometric formation can maximize the utilization of the space available between the lenses in the optical system. By adopting this configuration, the design can significantly enhance the efficiency of light scattering towards the objects being imaged.

The geometric configuration can result in improved light distribution. The shape resulting from the intersection of four circles is chosen to fit perfectly within the interstitial spaces between the optical focusing elements (e.g. lenses). Such configuration can ensure that the maximum possible area is available for light scattering without wastage or overlap, thus preventing inefficient light use.

The geometrically defined contours of the light-scattering sites, which can be characterized by parts of the circles, can be specifically engineered to maximize the scattering area. The uniform and efficient scattering of light towards the object enhances the imaging system's ability to render images that are closer to the natural appearance of the object, with reduced distortion or loss of detail due to lighting inconsistencies.

Optionally, the delineation of the light-scattering sites, as defined by the intersection of four circles, is configured to complement the shape of the lenses within the optical system.

The geometric compatibility between the light-scattering sites and the lenses can guarantee that the scattered light is directed with high precision towards the lenses, which then focuses the light onto the imager pixels with minimal loss or dispersion. This precise guidance and concentration of light enhance the efficiency of the optical system by ensuring that the maximum amount of useful light reaches the imager pixels. As a result, the imaging system can capture images with a higher degree of brightness and clarity.

The complementary geometry improves light focus and directionality. In optical systems, controlling the path of light can be important to achieving high image quality. By ensuring that the light is not only evenly scattered but also precisely directed, this configuration minimizes the occurrence of optical aberrations, such as blurring or distortion, that could degrade image quality. The tailored shaping of the scattering sites, therefore, plays an important role in maintaining the integrity of the light as it travels through the optical system, ensuring that images are captured with sharp detail and high contrast.

Moreover, this alignment significantly enhances the system's overall imaging capabilities. In imaging technology, the ability to capture images with high contrast and detail is often limited by the effectiveness of the optical system in managing light. By maximizing the efficiency of light transmission through such an innovative geometric design, the imaging system can achieve superior performance in capturing detailed and high-contrast images.

Optionally, the waveguide material comprises glass or polymethyl methacrylate (PMMA), and the scattering sites are created by incorporating titanium dioxide (TiO2) particles into a negative photoresist applied on the waveguide, wherein the scattering sites are patterned such that their size and scattering capacity increase from edges adjacent to light-emitting sources towards the center of the waveguide in order to achieve uniform light distribution across the waveguide.

The selection of materials such as glass or polymethyl methacrylate (PMMA) for the waveguide, along with the integration of titanium dioxide (TiO2) particles into a negative photoresist, leverages the intrinsic properties of these materials to achieve improved light management within the system.

Glass and PMMA facilitate the efficient propagation of light with minimal loss. Glass offers superior hardness and resistance to environmental factors, while PMMA provides a lightweight alternative with good optical properties and ease of processing. The choice between glass and PMMA can be dictated by the specific requirements of the imaging application, such as the need for weight reduction or resistance to physical stress.

The incorporation of titanium dioxide (TiO2) particles into a negative photoresist is an important step in creating effective scattering sites on the waveguide. TiO2 has a relatively high refractive index, making it an excellent candidate for scattering light. When embedded in a negative photoresist on the surface of the waveguide, these particles enable precise manipulation of light directionality. The photoresist acts as a matrix that holds the TiO2 particles in place, allowing for the precise patterning of scattering sites through photolithography.

The use of photolithography in patterning the scattering sites permits exact control over their size and spatial distribution. This precision is important for tailoring the light emission profile across the waveguide, ensuring that light is uniformly distributed and directed towards the object to be imaged. By adjusting the concentration and size of TiO2 particles within the photoresist, and hence in the scattering sites, it's possible to modulate the scattering strength and directionality of light.

Gradient patterning, where the size and scattering capacity of sites increase from the waveguide's edges towards its center, can ensure that areas closer to the light source (typically located at the edges of the waveguide) do not overpower the central regions in terms of brightness. Such a balanced approach compensates for the natural decrease in light intensity as it travels through the waveguide, resulting in a consistent illumination across the entire field of view. This balanced distribution of light can be important for achieving high-quality images with even lighting, devoid of shadows or bright spots.

Optionally, the optical system comprises an optical layer stack situated between the frontlight unit and the imaging panel, wherein the stack includes a micro-lens array (MLA) and a pinhole layer fabricated on individual glass plates, which are assembled using optically clear adhesives to maintain precise alignment with the imager pixels.

The system may be composed of an optical layer stack that occupies a position between the frontlight unit and the imaging panel. The stack can be arranged to include a micro-lens array (MLA) and a pinhole layer, with each component fabricated on individual glass plates. The assembly of these components using optically clear adhesives can be important for ensuring that each layer is perfectly aligned with the imager pixels below.

Each micro-lens may focus light onto its corresponding pinhole, which then directs the light onto a specific imager pixel. This focused directionality ensures that light is not scattered or lost within the system, but is instead precisely channeled to maximize the effectiveness of the imaging process. A significant improvement in the quality of the images captured by the system can be obtained.

Optionally, the light directing elements are light-emitting diodes positioned to emit light directly towards the object to be imaged.

The targeted illumination strategy employed through the use of LEDs ensures that light is focused directly on the object to be imaged.

Optionally, the light directing elements are provided by a micro-LED array. Micro-LEDs, distinguished by their compact form factor, allow for a dense packing within the array, resulting in a highly uniform light output that can be modulated with exceptional granularity. Such a configuration ensures that the illumination can be tailored to the specific requirements of the imaging scenario, whether it necessitates subtle brightness adjustments or complex patterns of light distribution. This level of control is important in mitigating common illumination challenges, such as shadows, glare, or uneven lighting, which can adversely affect image quality.

Optionally, the waveguide and optical system are configured to have a curved structure, enabling the imaging system to be adapted for use on a curved surface (e.g. an arm). This can ensure consistent illumination and image capture across the curved surface.

Optionally, the system employs transparent micro-LED displays. This approach provides an alternative method for integrating light directing elements (cf. acting as light sources) into the imaging panel, offering advantages in terms of transparency and light distribution. Also the control of the light emitted may be better controlled, resulting in more homogenous and uniform light distribution.

In some examples, light sources are integrated into a plastic cover via injection molding. This method allows for precise placement and encapsulation of light sources within the cover.

The imaging system's optical design may be configured to employ lenses to capture light at various angles, thus enabling sharp imaging of objects at different distances. The focal length and depth of focus of these lenses may be important parameters that determine the ability to maintain image clarity across a range of object distances.

The design of the imaging system can effectively address optical cross-talk, a phenomenon where light from one point of an object affects multiple pixels, resulting in a blurred image. The curvature of the lens, the optical refractive index, the pitch of the lens elements, and the size of the pinhole may be carefully optimized to mitigate cross-talk and enhance image resolution and quality.

In some examples, in the manufacturing process, photolithographic techniques are used to create light scattering structures, e.g. with titanium dioxide particles. This process can enhance light emission by increasing the concentration of e.g. TiO2 particles, which has been experimentally shown to improve light output.

Optionally, gradient light scattering structures, where the size and scattering capacity of sites vary across the waveguide, ensures uniform light distribution.

In some examples, the waveguide material comprises glass or polymethyl methacrylate (PMMA), with scattering sites created by incorporating titanium dioxide (TiO2) particles into a negative photoresist. This gradient patterning ensures balanced light distribution across the waveguide.

Further, the imaging panel's fill factor, the size of the pixels, and the distance between them (pitch) can be selected so as to balance sensitivity and resolution. In this way, challenges such as optical crosstalk and image quality can be effectively addressed.

Optical crosstalk, which can occur when light from one pixel interferes with adjacent pixels, can be mitigated using a black/absorbing photoresist and/or laser cutting. Additionally, optimizing the fill factor of active pixels, which is the ratio of light-sensitive area to the total pixel area, can be important for maximizing light capture and image resolution. The use of black photoresist provides the ability to reduce unwanted reflections and improve contrast. This material can be directly applied to the imaging panel or used in combination with other techniques to enhance image quality.

Optionally, flexible imaging panels are employed. This can provide for improved versatility and adaptability of the imaging technology for various applications.

Optionally, the imaging system employs a scintillator layer that converts X-ray radiation into visible light. This visible light is then detected by the imaging panel, making the system suitable for medical X-ray detectors. This process allows for real-time imaging during medical procedures, providing clear and detailed images.

Optionally, an absorptive layer (e.g. black photoresist) is selectively used to minimize unwanted reflections and light transmission through the imaging panel, thereby reducing crosstalk and improving contrast.

Optionally, laser cutting techniques are used to process the imaging panel, creating precise openings or features that help minimize optical crosstalk. This method ensures that light is accurately directed and absorbed where necessary, enhancing the overall image quality.

In some examples, light-scattering sites incorporate a reflective metal layer, such as aluminum or silver, or any other suitable material. This layer helps control the direction of light, ensuring it is efficiently directed towards the object to be imaged. The reflective metal layer can significantly enhance the light output and uniformity of the imaging system.

Optionally, the imaging panel features gradient patterning of light-scattering sites, where the size and scattering characteristics of these sites vary across the waveguide. This gradient ensures that light is uniformly emitted across the waveguide, compensating for the natural decrease in light intensity as it travels from the light-emitting sources to the center of the waveguide.

In some examples, the imaging panel is arranged under or integrating within a display. Different methods, such as using transparent imaging panels or embedding photo-sensitive pixels in display panels can be used.

In some examples, the imaging system can use optical collimators instead of conventional lenses to focus light. Optical collimators are designed to direct light rays parallel to each other, reducing optical aberrations and enhancing the clarity and sharpness of the captured images. This approach can simplify the optical system while maintaining high image quality.

Optionally, the thickness of the scattering material layer can be varied across the surface of the waveguide to optimize light distribution. This technique allows for fine-tuning of light intensity and uniformity, ensuring consistent illumination across the entire imaging area. The ability to control layer thickness precisely can be important for applications requiring high uniformity in light distribution.

According to an aspect, the invention provides for a method for capturing images of objects using an imaging system, the method comprising: positioning an object in contact with or at a distance from a surface of the imaging system, wherein an imaging panel is provided that is equipped with a plurality of imager pixels for capturing images of the object; illuminating the object from the front via a frontlight unit, wherein the frontlight unit includes a waveguide and a plurality of light directing elements distributed along said waveguide, and further wherein the waveguide is coupled with a light source arrangement configured to provide light within the waveguide, wherein light is directed towards the object utilizing the light directing elements within the waveguide; and capturing images of the illuminated object through the imaging panel, wherein an optical configuration positioned between the frontlight unit and the imaging panel is configured to focus and direct incoming light onto the imaging panel, wherein this optical configuration is configured to selectively direct light from the surface of the imaging system onto imager pixels of the imaging panel; and wherein the light directing elements are arranged within interstitial spaces formed by the adjacency of four neighboring imager pixels on the imaging panel as viewed from a top-down perspective, creating a matrix-like arrangement that enables emitted light to be evenly distributed and directed towards the object from between these pixels.

Each light directing element may be configured to function as a miniature light source. In some examples, the light directing element are light scattering sites that are configured to scatter incident light towards an object positioned in proximity to the imaging panel system. The scattered light from the object can be captured by the imaging pixels to form an image of the object.

The lens array and pinholes can be aligned with the imager pixels. The frontlight can be configured to emit light towards an object positioned on top of the imaging system without imaging the frontlight itself on the imager.

In some examples, a lens-like structure is positioned above the imaging pixels to focus the scattered light onto the imaging pixels, enhancing the resolution of the captured image. The optical system may form an optical stack.

The light-scattering sites are configured to direct light in a predetermined direction towards a surface of the waveguide facing the object to be imaged. In some examples, the light-scattering sites have a size that is smaller near the light entry points to larger towards the center of the waveguide to achieve uniform light distribution across the waveguide of the imaging panel. Additionally or alternatively, the sites may have different scattering properties based on their locality.

In some examples, the waveguide has one or more side-emissive light-emitting sources configured to direct light in the waveguide from one or more sides thereof.

In some examples, the light directing elements are light-emitting diodes positioned to emit light directly towards the object to be imaged.

In some examples, the waveguide structure is fabricated from a transparent or semi-transparent material compatible with the transmission of visible light or other electromagnetic radiation wavelengths relevant to the imaging application.

In some examples, the imaging pixels are part of a CMOS camera-like chip, configured to convert the captured light into electronic signals for image processing.

According to an aspect, the imaging system is a large-area thin film imager. It will be appreciated that a large-area thin film imager utilizes thin film materials to create imaging surfaces with dimensions significantly greater than those typical of standard rigid sensors. These imagers have extensive surface area at the imaging surface, which enables coverage of larger fields of view in a single imaging instance. Thin film materials are employed due to their flexibility, allowing the construction of imagers that are adaptable to varied surfaces and shapes. Large-area thin film imagers are often used in applications requiring expansive coverage. The technology combines high-resolution imaging capabilities with the unique properties of thin films, such as low weight and potential for conformability, to address needs in areas where traditional small-scale, rigid imaging devices are inadequate.

According to an aspect, the imaging system is integrated as an optical sensor for a portable device, such as a smartphone.

According to an aspect, the imaging system is integrated in an optical fingerprint recognition system. This allows users to authenticate their identity by placing their finger on any part of the screen, offering a seamless and intuitive user experience. Additionally, the technology could enable interactive features like zooming in on maps or selective app access through fingerprint recognition.

In some examples, the imaging panel of the system is integrated with display technology. This may be done by proper alignment in order to avoid interference between components. The imaging panel may be arranged beneath the display or a transparent imaging panel may be created that overlays the display.

It will be appreciated that any of the aspects, features and options described in view of the imaging system apply equally to the method and the described devices and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a cross-sectional side view of an embodiment of an imaging system;
Fig. 2 shows a schematic diagram of a top view of an embodiment of an imaging system;
Fig. 3 shows a schematic diagram of a top view of an embodiment of an imaging system;
Fig. 4 shows an exemplary manufactured frontlight; and
Fig. 5 shows a schematic diagram of a method.

### DETAILED DESCRIPTION

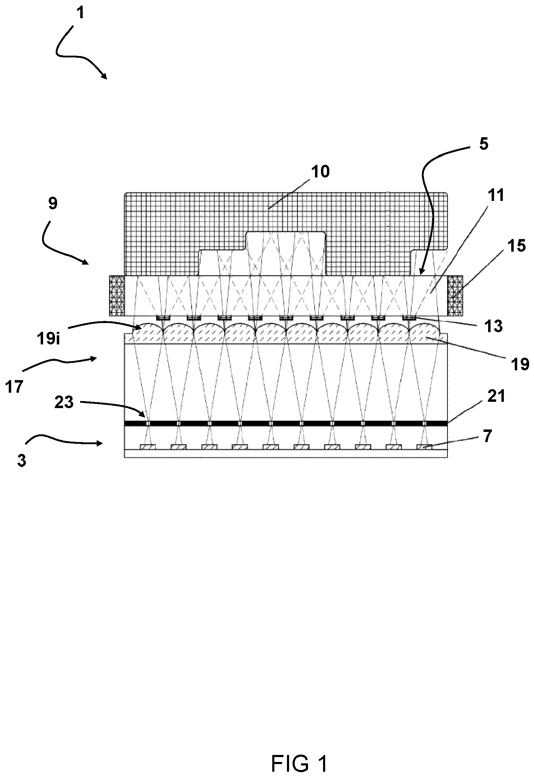

Fig. 1 shows a schematic diagram of a cross-sectional side view of an embodiment of an imaging system 1 for capturing images of objects 10 to be imaged. The system 1 comprises an imaging panel 3 configured to capture images of an object 10 in contact with and at a distance from a surface 5 (cf. imager surface) of the imaging system 1 by means of a plurality of imager pixels 7. The system 1 comprises a frontlight unit 9 positioned to illuminate the object 10 from the front, including a waveguide 11 and a plurality of light directing elements 13 distributed along said waveguide 11, wherein the waveguide 11 includes a light source 15 arrangement configured to provide light in the waveguide 11, and wherein the light directing elements 13 are configured to direct light towards the object 10 to be imaged. The system 1 comprises an optical system 17 positioned between the frontlight unit 9 and the imaging panel 3, including a lens array 19 and a corresponding pinhole layer 21, wherein each lens 19i of the lens array 19 is aligned with a respective pinhole 23 to direct light onto a respective imager pixel 7 of the imaging panel 3. The light directing elements 13 are arranged within interstitial spaces 15 formed by the adjacency of four neighboring imager pixels 7 on the imaging panel 3 as viewed from a top-down perspective, creating a matrix-like arrangement that enables emitted light to be evenly distributed and directed towards the object 10 from between these pixels.

The integration of light directing elements within a waveguide can effectively replace the traditional uniform light source located beneath the imaging panel, as commonly used in LCD backlights. These light directing elements (e.g. scattering sites, microLEDs, etc.) can act as miniature light sources, uniformly distributing light towards the object to be imaged, thus ensuring consistent illumination.

The object 10 may be a subject or entity that is being imaged, positioned above the system 1. However, other orientations are also envisaged, for example, the object being placed on the bottom or the side. Various arrangement and configurations are possible.

The waveguide is a layer that directs the light from the light source (e.g. LEDs) to the light directing elements 13. In some examples, these light directing elements 13 are light scattering sites. The waveguide then receives light, for example by means of one or more light sources connected to the waveguide, for instance from side-mounted LEDs, and then the scattering sites 13, located at or within the waveguide, manage the direction and dispersion of light (e.g. upward) towards the object. In some examples, each site includes a reflector to enhance light directionality.

It will be appreciated that LEDs may be positioned at the edges of the waveguide, serving to inject light into the waveguide. However, various other configurations are possible.

In some examples, the lens array 19 is a microlens array that is configured to focus the light through the subsequent layer. The pinhole layer 21 may be configured directly beneath the lens array 19. The pinhole layer 21 may be configured to allow light to pass through aligned pinholes 23, ensuring that light reaches the imager pixels 7 directly below with minimal scattering. The imager pixels 7 are sensor elements that capture the light transmitted through the pinhole layer, forming the image.

In some examples, the scattering sites in the waveguide may be optimized for size and shape (e.g., diamond-shaped for increased scattering area) to enhance light output and uniformity.

In some examples, the system integrates a microlens array (MLA) with a pinhole layer aligned with the imager pixels. This arrangement offers higher resolution and contrast, especially at a distance.

In some examples, a layer stack approach is utilized, wherein each element is precisely fabricated on glass using photolithography. This technique ensures high resolution, matching coefficients of thermal expansion (CTE), and accurate assembly.

In some examples, a low fill factor for the active pixel within the total array area is employed such as to minimize optical crosstalk. In this way, image contrast resolution can be enhanced. This approach differs from conventional large-area imagers like X-ray detectors, which usually have high fill factors and are almost non-transparent.

In some examples, scattering particles (e.g., TiO2) are added to a photoresist, to enhance the light output and uniformity of the frontlight.

In the shown example, the imaging surface 5 is flat. However, in other examples, the imaging panel can be designed with a flexible and/or curved structure. This design can be highly beneficial for some applications, such as medical applications. Imaging panels can be created that can adequately conform to the shape of an object/entity (e.g. patient's body), providing more accurate and comprehensive scans. For example, a curved imaging panel could be used to scan a curved object, offering improved contact and better imaging results.

According to the invention, an optical configuration is provided that is positioned between the frontlight unit and the imaging panel, configured to focus and direct incoming light onto the imaging panel, wherein this optical configuration is configured to selectively direct light from the surface of the imaging system onto imager pixels of the imaging panel. In the example shown in fig. 1, the optical configuration comprises a lens array and a corresponding pinhole layer, wherein each lens of the lens array is aligned with a respective pinhole to direct light onto a respective imager pixel of the imaging panel. However, it will be appreciated that in an alternative embodiment, the optical configuration may include an optical collimator layer.

The optical collimator layer within an imaging system can be configured to manage and refine the way light travels from the imaging surface 5 to the imaging panel. An optical collimator is a device or set of devices that narrows a beam of particles or waves, in this case, light waves, to make the light rays parallel. This alignment reduces scattering and divergence of the light, thereby enhancing the precision and sharpness of the images captured by the imager pixels.

In the context of the imaging system, the collimator layer consists of an array of optical collimators, each aligned with corresponding elements of the system such as light sources or imager pixels.

By making the light rays parallel, the collimator layer ensures that the light reaches the imager pixels in a direct and uniform manner. This is particularly beneficial when imaging objects at various distances from the imaging panel, as it maintains consistent lighting and focus.

Collimators are important in minimizing various optical aberrations such as chromatic aberration and spherical aberration. These aberrations can distort the image, reducing the clarity and accuracy of the captured image. By controlling the angle of light entry (making it close to the normal of the imaging surface), the collimator enhances the overall image quality.

Advantageously, the use of collimators can provide for a more compact and efficient design of the optical configuration. Since collimators can effectively manage light without the need for complex lens systems, the overall size and complexity of the optical setup can be reduced.

The optical collimator layer may involve materials and structures that can precisely control light. Exemplary materials used in optical collimators include glass or plastic with specific refractive indices designed to direct the paths of incoming light rays. The collimators may be fashioned as small cylindrical or conical structures that align with each individual imager pixel.

In some examples, the collimator layer can be placed between the light directing elements of the frontlight unit and the imaging panel. Each collimator would be oriented to ensure that the light it directs is incident at angles close to the normal of the surface of the imaging panel. This orientation can maximize the effectiveness of light use and minimize light loss, thereby enhancing the efficiency of the imaging system.

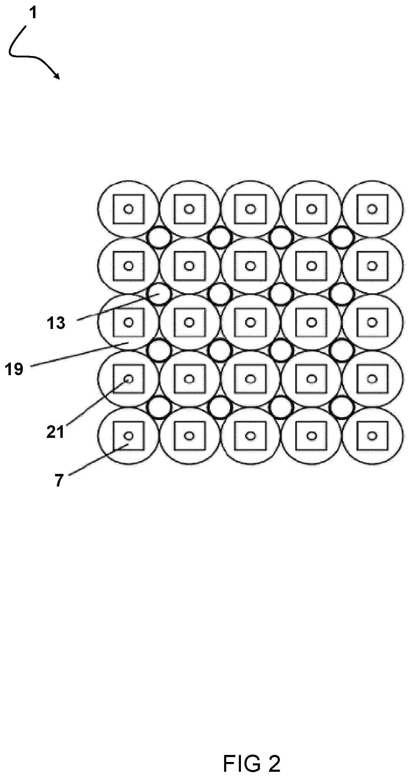

Fig. 2 shows a schematic diagram of a top view of an embodiment of an imaging system 1. This figure provides a top-down perspective of the alignment between i.a. the light directing elements 13 and the imager pixels. It shows a grid of circles (representing the microlenses and pinholes) aligned precisely over a square grid (the imager pixels). Each circle in the grid corresponds to a microlens in the MLA, with the underlying pinhole aligned directly above an imager pixel. The microlenses, pinholes, and imager pixels are aligned to maximize light capture efficiency and image resolution. This alignment ensures that light is directed effectively from the light directing elements 13 (e.g. scattering sites, microleds, etc.) through the MLA and pinhole layers, ultimately being captured by the imager pixels.

By positioning light directing elements 13 in the interstitial spaces between four neighboring imager pixels (as seen in the top view of the matrix-like arrangement), the system ensures that light is not only emitted from a single point but rather distributed evenly across the imaging area. This avoids creating 'hot spots' or overly bright areas directly under single points of light emission, which can lead to uneven image quality and resolution loss.

This arrangement allows light to be directed towards the object from multiple angles. This can be important for reducing shadows and uneven lighting, which are common issues when objects are imaged from a distance. The multidirectional light coverage helps maintain image clarity and detail regardless of the object's distance from the panel.

Scattering sites, possibly enhanced with reflective materials like metals or high-refractive-index particles such as titanium dioxide (TiO2), can increase the efficiency of light use. They reflect and scatter incoming light uniformly towards the object, maximizing the illumination available for image capture. This is particularly effective in overcoming the typical falloff in brightness and resolution experienced as the distance between the object and the imaging system increases.

The advantageous use of scattering sites shapes the trajectory of light, ensuring that it reaches deeper into the areas between imager pixels. This targeted light delivery can be important for maintaining resolution at greater distances, as it compensates for the natural spread and dilution of light over space.

Each lens in the microlens array (MLA) may be aligned with a respective pinhole, creating a focused pathway for light to reach the specific imager pixels below. This alignment can be important for ensuring that light is not wasted or scattered randomly within the device but is precisely directed to where it is needed for image capture.

This precise control over light direction minimizes optical losses, which are common in less structured systems where light can stray from its intended path. The focused light increases the intensity and uniformity of illumination received by each pixel, important for capturing sharp, detailed images across varying distances.

Techniques like photolithography for patterning the scattering sites allow for very fine control over their size and distribution. This precision ensures that the light-scattering characteristics of each site are optimized for uniform light emission across the entire waveguide, addressing the challenge of consistent light distribution.

The choice of materials, such as the use of glass or polymethyl methacrylate (PMMA) in the waveguide and TiO2 in the scattering sites, enhances the optical properties of the system. These materials are selected for their ability to transmit light efficiently and withstand environmental stresses, contributing to the system's overall performance and durability.

In accordance with the invention, the imaging system effectively maintains high resolution even as the object distance varies, which is a significant improvement over traditional imaging technologies that often suffer rapid resolution degradation with distance.

In some examples, instead of scattering sites, micro-LED arrays are employed for enhanced control. The imaging system may incorporate micro-LED arrays that provide enhanced control over light emission. The compact form factor and dense packing of micro-LEDs allow for precise modulation of light output, which can be important for achieving uniform illumination and mitigating common lighting challenges such as shadows and glare.

In some examples, light sources, such as LEDs, can be integrated into the waveguide using injection molding techniques. This method encapsulates the light sources within a plastic cover, providing protection and ensuring precise alignment with the imaging pixels. Injection molding allows for the creation of complex shapes and structures that enhance the overall performance and durability of the imaging system.

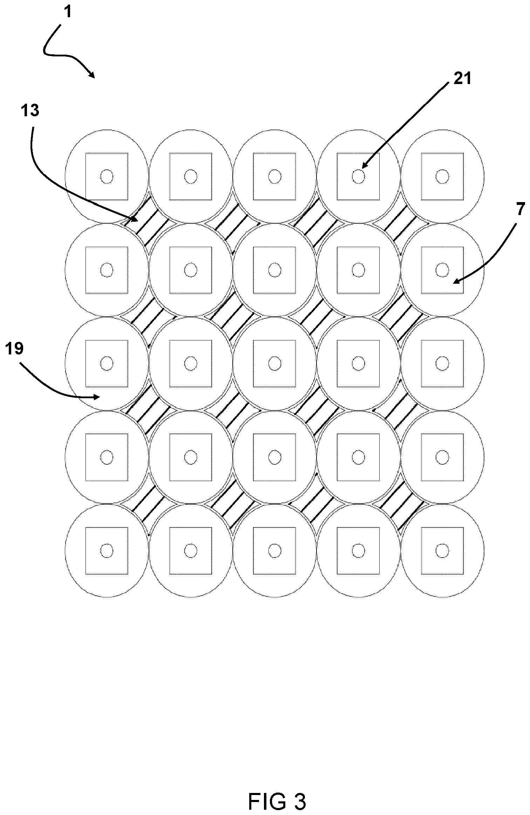

Fig. 3 shows a schematic diagram of a top view of an embodiment of an imaging system 1. This figure presents a top-down view of an imaging system configuration. The light directing elements 13 are arranged within interstitial spaces formed by the adjacency of four neighboring imager pixels on the imaging panel as viewed from a top-down perspective, creating a matrix-like arrangement that enables emitted light to be evenly distributed and directed towards the object from between these pixels. In this example, the surface shape of each light-scattering site 13 is defined by the geometric boundaries created by the intersection of four circles, wherein the resulting shape of the light-scattering site is contoured by parts of said circles, wherein the delineation of the light-scattering sites, as defined by the intersection of four circles, is configured to complement the shape of the lenses within the optical system.

The diamond shaped scatter islands (dashed area) may provide for an improved utilization of available area, in an advantageous way.

The matrix-like arrangement enables light to be evenly distributed and directed towards an object positioned on or near the imaging panel. The light directing elements 13, may be in the form of light-scattering sites or micro-optical components.

The clear delineation and symmetric placement of these elements can improve the uniformity of light distribution across a broad range of object proximities.

It will be appreciated that the "interstitial spaces" may be understood as areas between adjacent imager pixels on the imaging panel. These spaces are not merely gaps but are specifically utilized to enhance the functionality of the imaging system by incorporating light directing elements (e.g. light scattering sites, light emitting diodes, etc.).

The interstitial spaces may be used to house different kinds of light directing elements, which play an important role in evenly distributing light across the imaging surface. By situating these elements within the interstitial spaces, the imaging system 1 can ensure that the light is spread not only directly over each pixel but also fills the gaps between pixels. This arrangement helps in minimizing shadow effects and uneven lighting, which are common issues in imaging systems known in the art.

Positioning the light directing elements 13 in these spaces allows the system to maximize the illuminated area on the imaging panel. Each light directing element can influence the light distribution for multiple pixels simultaneously, thereby enhancing the efficiency and uniformity of the lighting.

The strategic placement of these light directing elements within the interstitial spaces ensures that they do not obstruct the direct imaging path of any single pixel but instead complement the overall light distribution. This setup can be important for maintaining high resolution and image quality, especially when capturing images of objects at varying distances from the panel.

The interstitial placement of these light directing elements 13 also works synergistically with other components of the optical system, such as the lens array and the pinhole layers. By aligning each lens with a corresponding pinhole and subsequently with an imager pixel, the system directs light precisely where needed, while the light directing elements in the interstitial spaces ensure that there are no dark areas or uneven illumination.

In the example shown in fig. 3, a structured arrangement is provided where the interstitial spaces between the imager pixels exhibit a unique geometric shape that appears as a shape contoured by multiple circles, resembling a diamond shape. This geometric configuration is formed by the intersections of the peripheries of four neighboring circles (cf. defined by lenses).

The diamond-shaped configuration may house the light directing elements, which may include scattering sites, diffraction elements, light emitting components, and/or other micro-optical components, to ensure that light is evenly scattered or directed, thereby improving the overall image quality by reducing shadows and enhancing the uniformity of illumination. Advantageously, light can be emitted more evenly and distributed across the imaging surface.

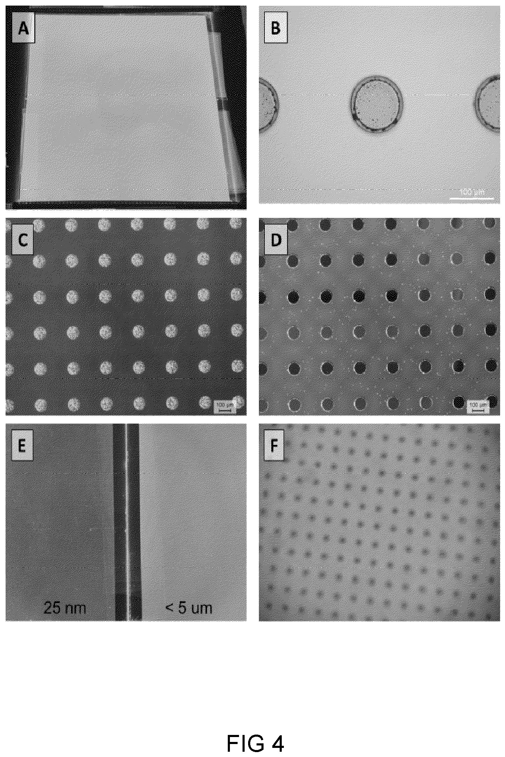

Fig. 4 shows an image of an exemplary manufactured frontlight. In this example, as shown in (A), the frontlight is provided with LED strips as the incoupling lightsource, connected on opposite sides of the array. TiO2 particles in a negative photoresist were used to manufacture the scattering sites, an Al reflector for each scattering side was applied and is slightly larger than the scattering area, and a linear gradient in scattering site dimensions was made from smaller dimensions at the sides near the LED input and larger towards the middle. In (B) a microscopy image of such a scattering site and the metal reflector underneath is shown. In (C), a microscopy image of the scattering sites with the microscope light off and LED light source on is shown. In (D), the same location with the microscope light on and the LED light source off is shown. In (E), side by side the difference in emission is shown, where using larger (> 5 um) TiO2 particles in the photoresist resulted in more scattering and higher emission compared to nanoparticles (< 25 nm, but likely also with agglomerates present). In (F), the rear side (metal reflector side) of the frontlight with a white paper underneath is shown. The only observable light is that reflected from the surface underneath the frontlight.

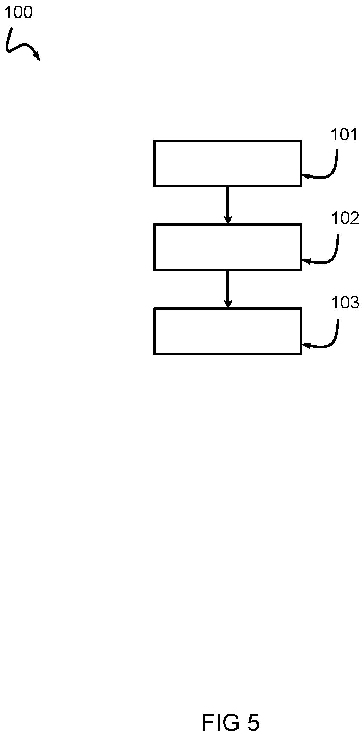

Fig. 5 shows a schematic diagram of a method 100 for capturing images of objects using an imaging system 1. In a first step 101, an object is positioned in contact with or at a distance from a surface of the imaging system, wherein an imaging panel is provided that is equipped with a plurality of imager pixels for capturing images of the object. In a second step 102, the object is illuminated from the front via a frontlight unit, wherein the frontlight unit includes a waveguide and a plurality of light directing elements distributed along said waveguide, and further wherein the waveguide is coupled with a light source arrangement configured to provide light within the waveguide, wherein light is directed towards the object utilizing the light directing elements within the waveguide. In a third step 103, images of the illuminated object are captured through the imaging panel, wherein an optical configuration positioned between the frontlight unit and the imaging panel is configured to focus and direct incoming light onto the imaging panel, wherein this optical configuration is configured to selectively direct light from the surface of the imaging system onto imager pixels of the imaging panel. Advantageously, the light directing elements are arranged within interstitial spaces formed by the adjacency of four neighboring imager pixels on the imaging panel as viewed from a top-down perspective, creating a matrix-like arrangement that enables emitted light to be evenly distributed and directed towards the object from between these pixels.

Advantageously, it can be effectively prevented that the system loses imaging resolution rapidly when the object is further away from the imager surface. The imaging system with frontlight solution can capture images in reflection and can largely maintain resolution for objects or parts of objects located away from the imager surface, as well as for regions of the object in contact with the surface, all without an unwanted imaging of the frontlight on top of the imager.

In some examples, the imaging system employed may have an imaging panel with an optical layer or layer stack on top of the imaging panel and a patterned frontlight comprised of a waveguide with scattering sites that each have a reflector, assembled such that the scattering site are aligned in the stack to the crosspoints between the imager pixels. The optical layer stack may comprise a layer with pinholes aligned to an optical array (e.g. microlens array MLA) fabricated on top, where the lenses and pinholes are aligned with the imager pixels. In some examples, the uniform frontlight is fabricated using photolithography of a photoresist containing scattering particles (e.g. TiO2), where each scattering island has a reflective metal (e.g. Al) such that light in the frontlight only couples out in a single direction towards the object on top of the imager.

The imaging system may provide for a precise alignment between scattering sites and imaging pixels.

In an exemplary embodiment, the waveguide is made of a transparent material (e.g. glass or similar), next to which on both sides a strip of side emissive LEDs are mounted to couple light into the waveguide. Various waveguide materials may be used, next to glass, for example PMMA.

In some examples, to fabricate the scattering sites on the waveguide, TiO2 particles may be loaded into a negative photoresist. It was observed that this solution gives adequate results in terms of resolution and precision, as well as process time. Since these particles scatter light, the addition to a photoresist means that the patterning resolution is somewhat decreased. Larger particles (> 1 um) were shown to enhance scattering and light output compared to nanoparticles (< 100 nm). Furthermore, a higher loading of particles enhance the light output. To achieve a uniform emission over the frontlight, a gradient in scattering sites may be introduced such that a smaller scattering site is close to LEDs where light enters the waveguide and larger scattering sites are present towards the middle.

In some examples, scattering sites may be fabricated using laser engraving in glass, sandblasting, etching through a mask, or by printing of the materials.

In some examples, photoresist is used on top of glass, where open holes in the resist layer were filled afterwards with TiO2 particles in a polymer matrix . It has been observed that more light escapes from the rear side of the panel since the additional resist on top of the glass waveguide has a near matching refractive index, meaning that light can also reach the scattering site at its vertical sides within the resist and be scattered to the rear of the panel.

In some examples, a metal may be used as material for the metal reflector. The effect is determined by the reflectivity of the metal. It has been observed that Al provides good results. Ag for example may provide even higher light output.

In some examples, in the frontlight unit, microLED arrays may be utilized instead of scattering sites. A combination of both techniques is also envisaged. Advantageously, such microLEDs have a very small footprint and can be very bright.

In some examples, circular scattering sites are employed. In other examples, the shape of the scattering site could be optimized to cover as much of the free area between the microlenses, for example by using a diamond-like shape, which can increase scattering area by around 15% compared to the circular scattering site.

In some examples, diffraction gratings may be used in the frontlight instead of the scattering sites.

In some examples, the pinhole layer is fabricated using a patterned black matrix photoresist. These may for example be fabricated on individual glass plates that can be integrated into a layer stack using optically clear adhesives between the different elements. Such black matrix photoresist may also be processed directly on top of the imaging panel. Alternative fabrication processes are also possible. For example, a patterned metal layer may be employed. However, in some cases using such patterned metal layer, unwanted light outside the pinhole area may internally reflect that might end up unwanted on the imaging panel. For example, another method may involve the use of black sheets with laser cut holes.

It will be appreciated that the fabrication of the patterned individual elements on glass by photolithography has the added benefit of matching coefficient of thermal expansion and accuracy when assembled in a full stack.

In some examples, the optical layer stack between the frontlight and the imaging panel, using e.g. an MLA (micro-lens-array) in combination with a pinhole layer, may be replaced with an optical collimator layer which is only transparent for incident light angles close to the surface normal. In some cases, these may have a lower angular resolution compared to a system with MLA and pinholes.

In some examples, a collimator film or layer is used in combination with an MLA. This may result in similar angular resolution performance, but with a slightly lower amount of incident light.

In some examples, for minimizing the amount of optical crosstalk the fill factor of the active pixel within the total array area should be low (pixel width < pixel pitch). The smaller the pixel, the less light it will capture. However, when using large pixels with respect to the pitch, light coming through microlenses under larger angles can reach neighboring pixels in the array, leading to reduced image contrast resolution.

Advantageously, the invention provides for a large-area imaging system that can capture images at distance from the surface, as well as in contact. Light from the rear of the frontlight may be minimal to non-existing. The open area of the frontlight allows for a maximization of the captured light reflected from the object on top. Compared to a flatbed scanner, instantaneous capture of images at high frame rates over the full area is possible, while keeping a thin form factor of the system.

In some examples, the layers are defined by photolithography at high resolution and matching Coefficient of Thermal Expansion (CTE).

Advantageously, the imaging system can provide for a large-area imager that at least largely maintain contrast resolution at several cm distance from the imaging surface. Most common large area imagers such as used in X-ray detectors require a very high fill factor of the pixel and are close to non-transparent. Hence, these are normally not used for measurements in reflection. Third, the addition of scattering particles (e.g. TiO2) to a photoresist in such known device would be unwanted due to the loss in patterning resolution.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. An imaging system for capturing images of objects to be imaged, comprising:
an imaging panel configured to capture images of an object in contact with and at a distance from a surface of the imaging system by means of a plurality of imager pixels;
a frontlight unit positioned to illuminate the object from the front, including a waveguide and a plurality of light directing elements distributed along said waveguide, wherein the waveguide includes a light source arrangement configured to provide light in the waveguide, and wherein the light directing elements are configured to direct light towards the object to be imaged; and
an optical configuration positioned between the frontlight unit and the imaging panel, configured to focus and direct incoming light onto the imaging panel, wherein this optical configuration is configured to selectively direct light from the surface of the imaging system onto imager pixels of the imaging panel; and
wherein the light directing elements are arranged within interstitial spaces formed by the adjacency of four neighboring imager pixels on the imaging panel as viewed from a top-down perspective, creating a matrix-like arrangement that enables emitted light to be evenly distributed and directed towards the object from between these pixels.

2. The imaging system according to claim 1, wherein the optical configuration comprises a lens array and a corresponding pinhole layer, wherein each lens of the lens array is aligned with a respective pinhole to direct light onto a respective imager pixel of the imaging panel.

3. The imaging system according to claim 1, wherein the optical configuration includes an optical collimator layer transparent for incident light angles close to the surface normal.

4. The imaging system according to claim 1, 2, or 3, wherein the light directing elements are distributed within or on a surface of the waveguide facing towards the optical system.

5. The imaging system according to any one of the preceding claims, wherein one or more light-emitting sources are arranged adjacent to the waveguide, the one or more light-emitting sources being configured to couple light into the waveguide, and wherein the light directing elements are light-scattering sites.

6. The imaging system according to claim 5, wherein the light-scattering sites include a reflective metal layer.

7. The imaging system according to claim 5 or 6, wherein the light-scattering sites comprise light scattering particles embedded in a medium, the light scattering particles being configured to scatter light towards a side of the frontlight unit that faces the object to be imaged.

8. The imaging system according to claim 5, 6 or 7, wherein the light-scattering sites include titanium dioxide (TiO2) particles.

9. The imaging system according to any one of the preceding claims 5-8, wherein the scattering sites are patterned using photolithography.

10. The imaging system according to any one of the preceding claims 5-9, wherein the light-scattering sites have a varying size and/or scattering characteristics based on their proximity to the one or more light-emitting sources in order to uniformly emit light across the waveguide.

11. The imaging system according to any one of the preceding claims 5-10, wherein the surface shape of each light-scattering site is defined by the geometric boundaries created by the intersection of four circles, wherein the resulting shape of the light-scattering site is contoured by parts of said circles.

12. The imaging system according to claim 11, wherein the delineation of the light-scattering sites, as defined by the intersection of four circles, is configured to complement the shape of the lenses within the optical system.

13. The imaging system according to any one of the preceding claims 5-12, wherein the waveguide material comprises glass or polymethyl methacrylate (PMMA), and the scattering sites are created by incorporating titanium dioxide (TiO2) particles into a negative photoresist applied on the waveguide, wherein the scattering sites are patterned such that their size and scattering capacity increase from edges adjacent to light-emitting sources towards the center of the waveguide in order to achieve uniform light distribution across the waveguide.

14. The imaging system according to any one of the preceding claims 2-13, wherein the optical system comprises an optical layer stack situated between the frontlight unit and the imaging panel, wherein the stack includes a micro-lens array (MLA) and a pinhole layer fabricated on individual glass plates, which are assembled using optically clear adhesives to maintain precise alignment with the imager pixels.

15. A method for capturing images of objects using an imaging system, the method comprising:
positioning an object in contact with or at a distance from a surface of the imaging system, wherein an imaging panel is provided that is equipped with a plurality of imager pixels for capturing images of the object;
illuminating the object from the front via a frontlight unit, wherein the frontlight unit includes a waveguide and a plurality of light directing elements distributed along said waveguide, and further wherein the waveguide is coupled with a light source arrangement configured to provide light within the waveguide, wherein light is directed towards the object utilizing the light directing elements within the waveguide; and
capturing images of the illuminated object through the imaging panel, wherein an optical configuration positioned between the frontlight unit and the imaging panel is configured to focus and direct incoming light onto the imaging panel, wherein this optical configuration is configured to selectively direct light from the surface of the imaging system onto imager pixels of the imaging panel; and
wherein the light directing elements are arranged within interstitial spaces formed by the adjacency of four neighboring imager pixels on the imaging panel as viewed from a top-down perspective, creating a matrix-like arrangement that enables emitted light to be evenly distributed and directed towards the object from between these pixels.
